Europäisches Patentamt

European Patent Office

Office européen des brevets

(19)

(11) Publication number: **0 009 511**
**B1**

(12) # EUROPEAN PATENT SPECIFICATION

(45) Date of publication of patent specification: **12.10.83**

(21) Application number: **78101055.8**

(22) Date of filing: **02.10.78**

(51) Int. Cl.³: **G 01 N 31/22,**
**G 08 B 21/00, H 01 H 33/00**

(54) Abnormal-condition detector for an electric apparatus.

(43) Date of publication of application:
**16.04.80 Bulletin 80/8**

(45) Publication of the grant of the patent:
**12.10.83 Bulletin 83/41**

(84) Designated Contracting States:
**CH DE FR**

(56) References cited:
**DE - A - 1 488 860**
**DE - A - 1 623 053**
**DE - A - 2 543 543**
**DE - C - 488 372**
**DE - C - 918 282**
**US - A - 1 796 746**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Yoshioka, Takeo**
**No. 80,Aza-Nakano, Minamishimizu,
Amagasaki-shi (JP)**

(74) Representative: **Wächtershäuser, Günter, Dr..**
**Tal 29**
**D-8000 München 2 (DE)**

Abnormal-condition detector for an electric apparatus

The present invention relates to an apparatus according to the preamble of the claim.

In general, when a fault occurs in an electric apparatus, decomposition products are produced whereby a commercial gas detector can be used as a fault detector. However, such a gas detector is mainly used for a low concentration level, and it responds to only one component, and it is not clearly understood whether suitable detection can be performed when various decomposition gases are produced in the electric apparatus and when they are gradually produced.

A detection apparatus according to the preamble of the claim is known from US—A—3512939. That apparatus allows an indication of the concentration of the acidic decomposition products. The concentration is correlated with a colour change of an indicator and a gas pressure. It is obvious that such a quantitative evaluation is rather complicated, unprecise and prone to personal colour evaluation errors.

It is an object of the present invention to provide an abnormal condition detector which easily, precisely and quickly detects an abnormal condition of an electric apparatus in which an insulating fluid is filled, such as a gas insulating switch.

Therefore, the apparatus is characterised by the features mentioned in the characterising portion of the claim. The present invention substitutes a colour comparison measurement and a pressure measurement by the measurement of a gas flow rate and the length of a coloured zone within a tube.

The measurement values are therefore accurate and reproducible.

Brief Description of the Drawings

Figure 1 is a block diagram showing the application of an abnormal condition detector according to the present invention;

Figure 2 shows a structure of an embodiment of the abnormal condition detector according to the present invention;

Figure 3 is a partially enlarged view of a detector element shown in Figure 2; and

Figure 4 is a graph for illustrating the response of the detector element.

Detailed Description

Referring to the drawings, the present invention will be illustrated in detail.

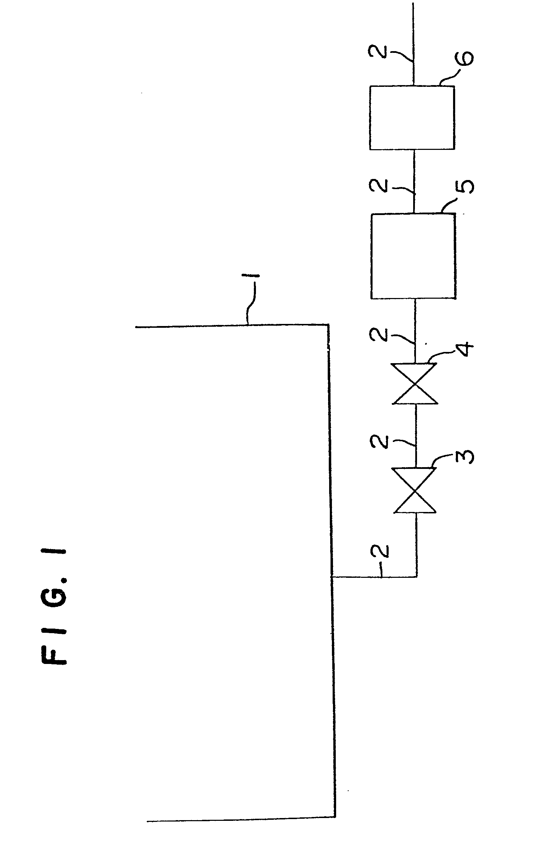

Figure 1 is a block diagram of an electric apparatus equipped with an abnormal condition detector of the present invention.

In Figure 1, the reference numeral (1) designates an electric apparatus such as gas insulator switch which contains a high voltage conductor and is filled with $SF_6$ gas; (2) designates a tube passage for discharging the $SF_6$ gas from the electric apparatus (1); (3) designates a stop valve for holding the $SF_6$ gas in the electric apparatus (1); (4) designates a flow rate control valve; (5) designates an abnormal condition detector of the present invention and (6) designates a flow rate meter for measuring a flow rate of the gas passing through the tube passage (2).

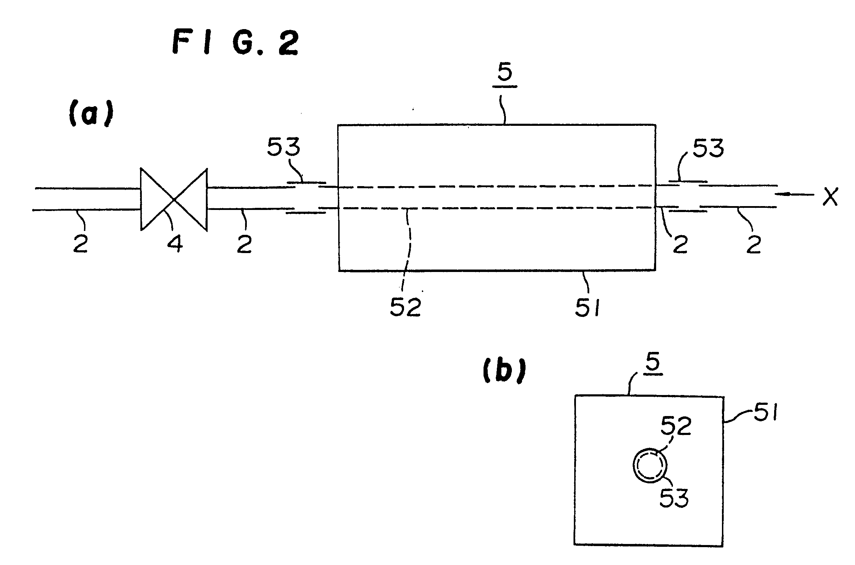

Figure 2 shows the structure of one embodiment of the abnormal condition detector of the present invention. In Figure 2, the reference numeral (52) designates a detecting element whose color is changed by inducing with an acidic gas; (51) designates a box made of transparent acryl resin through which the change of the detector (52) is detected and (53) designates a connecting tube for connecting the tube passage (2) and the abnormal condition detector (5). Figure 2(a) shows a side view of the abnormal condition detector (5) and Figure 2(b) shows a front view thereof from the arrow line direction X.

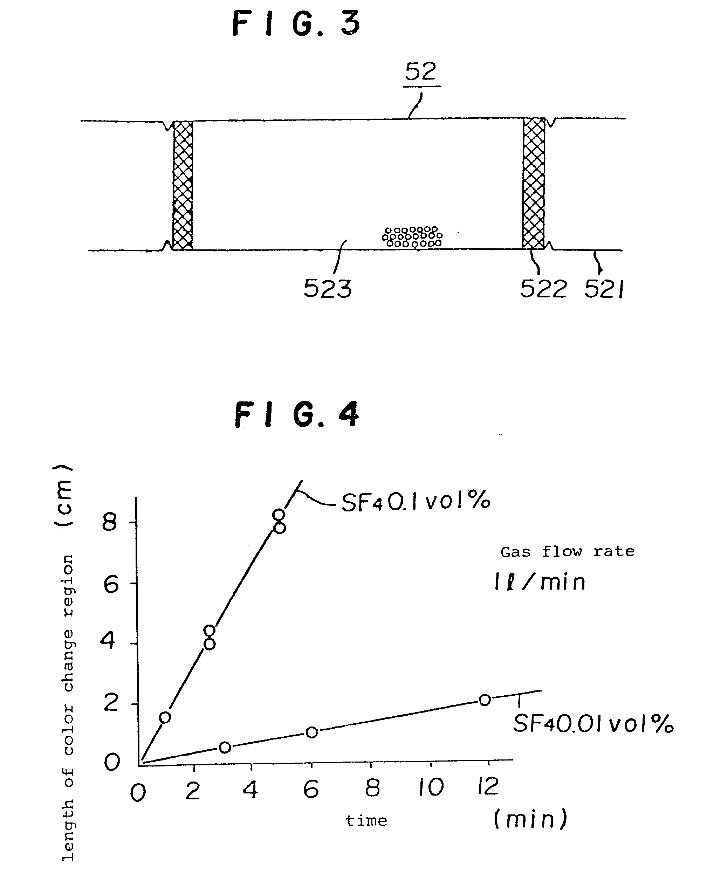

Figure 3 is a partially enlarged view of the detail structure of the detector element (52) of Figure 2. In Figure 3, the reference numeral (521) designates a glass tube; (523) designates a chromatography active alumina (basic) adsorbing Bromocresol purple sealed in the glass tube (521); (522) designates a cotton for supporting the active alumina (523).

The principle of the abnormal condition detector of the electric apparatus having the above-mentioned structure which is applied for a $SF_6$ gas apparatus will be illustrated.

When an arc is generated at a junction of a high voltage conductor, between the high voltage conductor and a surface of an insulating substance or between the high voltage conductors, $SF_6$ gas is decomposed to generate low fluorinated sulfur compounds such as $SF_4$. These low fluorinated sulfur compounds are chemically unstable to react with water in the $SF_6$ gas or the substance of the apparatus whereby acidic gases such as HF, $SO_2$, $SiF_4$, etc. are formed.

When an arc is generated on or near the surface of the insulating substance, the carbon component of the insulating substance or the other material in the apparatus is decomposed with oxygen gas to form carbon dioxide gas ($CO_2$) together with the decomposition of $SF_6$ gas.

Among the resulting acidic gases, $SF_4$, HF and $SiF_4$ are chemically unstable whereby they are reacted with the components of the substrates of the apparatus to be consumed and further they are adsorbed into an adsorbent disposed in the apparatus for a moisture adsorption or decomposed gas absorption whereby the reduction of the concentration of these gases is relatively fast. On the other hand, $SO_2$ and $CO_2$ are chemically stable and the effect of the adsorbent is relatively slow.

From the viewpoints of the modes of the gas components, when the fault current is relatively large, enough amounts of $SF_4$, HF and other gases remain for a long time, whereas when the fault current is small and is continuously passed, most of $SF_4$, HF and $SiF_4$ are adsorbed and only $SO_2$ and $CO_2$ remain. Accordingly, in order to detect such fault current, it is preferable to use a detector inducing to all of the acidic gases.

Accordingly, as shown in Figures 1 to 3, the gases are discharged from the electric apparatus (1) through the tube passage (2) as measured gases, and are passed through the detecting element (52) which contains the chromatography active alumina (basic) (523) adsorbing Bromocresol purple as a titration indicator. In order to detect the gases quantitatively, the flow rate of the gases is controlled by the flow rate control valve. When the particle size of the active alumina (basic) (523) is small and the passing gases are acidic, the color is changed from purple to yellow under enough reaction. Accordingly, the fault in the electric apparatus (1) can be detected by observing the condition of the color change of the detecting element (52) in the abnormal condition detector (5) through the box (51) made of the acryl resin. The quantitative detection may be attained by the observation of the flow rate of the gases and the length of the colour change.

The detector element (52) shown in Figure 3 can be prepared by the following method.

In the preparation, 3 ml of an indicator solution of Bromocresol purple (0.5 g of Bromocresol purple + 90 ml of ethanol (95 vol. %) balanced with water to be 100 ml) was mixed with 30 g of an active alumina for chromatography and a small amount of water is added and the mixture is thoroughly mixed to a uniform colored condition and is tacky between particles.

The active alumina is dried by passing a dry nitrogen gas at about room temperature.

The dried active alumina (basic) particles (523) are filled in the glass tube (521) densely. Both ends of the glass tube (521) are clogged with cotton plugs (522) for buffering and holding the active alumina. It is preferable to cover the detector element (52) with plastic caps in the non-use condition so as to shield it from air.

On the response of the detector element, the responses to various concentrations of $SF_4$ that is the length of the color change region under controlling a water content of 10 wt. %, are shown in Figure 4.

It is also possible to use the other indicators having a suitable pH color change interval such as Bromothymol Blue, Phenol Red, Neutral Red, Curcumine, Thymol Blue, Phenolphthalein, Cresolphthalein, Thymolphthalein, etc. together with the indicator mentioned above.

In order to enlarge the lower limit of the detection, it is preferable to use particles having similar specific gravity and similar particle size.

When higher quantitativity is required, it is preferable to prepare the detector element by adding a predetermined amount of a base to the active alumina for chromatography.

It is possible to eliminate needless components from the object for the measurement by selectively using a specific indicator.

As described above, in accordance with the present invention, the abnormal condition such as a partial arcing which is continuously caused can be effectively detected as well as a detection of the fault, with a different method than electrical or mechanical detection. Accordingly, the detection of the present invention can be combined with the electrical or mechanical detection. It is possible to detect $NO_2$ caused by a partial arcing of an electric apparatus using air as an insulating medium as the measuring object which reacts to produce an acidic gas and the economic abnormal condition detector of an electric apparatus can be obtained.

## Claim

An apparatus for a quantitative detection of acidic decomposition products arising in an insulating gas for an electric apparatus with a vessel visibly containing active alumina and a pH indicator adsorbed thereon and with a conduit for passing the insulating gas through said vessel, whereby a colour change of the pH indicator serves as a measure for the concentration of the acidic decomposition products characterized in that a flow rate meter (6) is provided in the gas conduit (2), that the vessel is a transparent tube (52) through which the gas passes in the longitudinal direction and which allows a measurement of the length of the colour change zone, whereby the quantity of acidic gas may be obtained from the flow rate and the length of the colour change zone.

## Patentanspruch

Vorrichtung zur quantitativen Bestimmung saurer Zersetzungsprodukte, welche in einem isolierenden Gas eines elektrischen Gerätes entstehen, mit einem Gefäß, welches aktives Aluminiumoxid sichtbar enthält sowie einen daran absorbierten pH-Indikator und mit einer Leitung zum Hindurchleiten des isolierenden Gases durch das Gefäß, wobei eine Farbänderung des pH-Indikators als Maß für die Konzentration des sauren Zersetzungsproduktes dient, dadurch gekennzeichnet, daß ein Durchflußmeßgerät (6) in der Gasleitung (2) vorgesehen ist, daß das Gefäß ein transparentes Rohr (52) ist, durch welches das Gas in Längsrichtung strömt und welches eine Messung der Länge der Farbänderungszone gestattet, wobei die Menge des sauren Gases aus der Durchflußrate und der Länge der Farbänderungszone ermittelbar ist.

**Revendication**

Appareil pour une détection quantitative de produits acides de décomposition apparaissant dans un gaz isolant pour un appareil électrique avec un récipient contenant de façon visible une alumine active et un indicateur de pH adsorbé sur celle-ci et avec un conduit pour faire passer le gaz isolant à travers ledit récipient, de sorte qu'un changement de couleur de l'indicateur du pH sert de mesure de concentration des produits acides de décomposition, caractérisé en ce qu'un débitmètre (6) est monté dans le conduit à gaz (2), en ce que le récipient est un tube transparent (52) à travers lequel le gaz passe dans le sens longitudinal et qui permet une mesure de la longueur de la zone de changement de couleur, de sorte que la quantité de gaz acide peut être obtenue à partir du débit et de la longueur de la zone de changement de couleur.

0 009 511

# F I G. I

FIG. 2

(a)

(b)

0 009 511

# F I G. 3

52

523       522 521

# F I G. 4

length of color change region (cm)

8

6

4

2

0

SF4 0.1 vol%

Gas flow rate
1 ℓ / min

SF4 0.01 vol%

0  2  4  6  8  10  12

time        (min)

3